.Europäisches Patentamt

**European Patent Office**

**Office européen des brevets**

(19)

(11) Numéro de publication : **0 128 073**
**B1**

(12) **FASCICULE DE BREVET EUROPÉEN**

(45) Date de publication du fascicule du brevet :
**12.11.86**

(21) Numéro de dépôt : **84400988.6**

(22) Date de dépôt : **15.05.84**

(51) Int. Cl.⁴ : **D 06 F 39/02**, G 01 F 11/26

(54) **Machine à laver le linge à couvercle comportant une réserve de produit lessiviel liquide.**

(30) Priorité : **20.05.83 FR 8308433**

(43) Date de publication de la demande :
**12.12.84 Bulletin 84/50**

(45) Mention de la délivrance du brevet :
**12.11.86 Bulletin 86/46**

(84) Etats contractants désignés :
**DE FR GB IT SE**

(56) Documents cités :
**DE-A- 2 609 875**
**FR-A- 1 518 309**
**FR-A- 2 170 884**
**US-A- 2 699 886**
**US-A- 2 946 489**

(73) Titulaire : **ESSWEIN S.A.**
**67, quai Paul-Doumer**
**F-92400 Courbevoie (FR)**

(72) Inventeur : **Didier, Laurent**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

EP 0 128 073 B1

Jouve, 18, rue St-Denis, 75001 Paris, France

## Description

L'invention est relative à un lave-linge comportant une réserve de produit lessiviel liquide dans son couvercle.

L'expression « produit lessiviel » englobe tous les produits utilisés dans un lave-linge : lessive (pour le lavage), assouplissant, teinture, antiseptique, etc...

L'invention concerne plus particulièrement les lave-linges à ouverture par le dessus, c'est-à-dire dont le couvercle est horizontal en position fermée.

Les lave-linges connus jusqu'à présent dont le couvercle comporte une réserve de produit lessiviel sont tels que la réserve doit être remplie avant chaque lavage. En outre pour l'introduction du produit lessiviel dans la machine on prévoit un entraînement par l'eau, ce qui n'est pas toujours simple à mettre en œuvre dans un couvercle.

L'invention remédie à ces inconvénients.

Elle concerne une machine à laver le linge comportant un couvercle à réserve de produit lessiviel liquide introduit dans la cuve lors du fonctionnement de la machine, le couvercle pouvant occuper deux positions différentes et contenant un bac et un réservoir se déplaçant avec le couvercle et ayant une ouverture permettant le remplissage en produit lessiviel lorsque le couvercle est ouvert, le réservoir-doseur communiquant avec le bac de façon qu'il soit rempli automatiquement par le liquide du bac après ouverture du couvercle. Une machine de ce type est décrite dans le brevet US 2 946 489. La machine selon l'invention est caractérisée en ce que le réservoir-doseur est en communication avec un conduit dont l'extrémité ouverte, lorsque le couvercle est fermé, détermine, selon le principe des vases communicants, le niveau de la surface libre du liquide dans ce réservoir.

La réalisation et l'utilisation du distributeur de produit lessiviel liquide sont particulièrement simples.

Dans un mode de réalisation préféré la quantité de produit liquide contenu dans le réservoir-doseur est ajustable par déplacement de l'extrémité supérieure du conduit avec lequel le fond de ce réservoir est en communication.

D'autres caractéristiques et avantages de l'invention apparaîtront avec la description de certains de ses modes de réalisation, celle-ci étant effectuée en se référant aux dessins ci-annexés sur lesquels :

la figure 1 est une vue d'ensemble, en perspective, d'un lave-linge selon l'invention,

la figure 2 est une vue schématique en coupe correspondant à la ligne 2-2 de la figure 1,

la figure 3 est une coupe schématique selon la ligne 3-3 de la figure 1,

la figure 4 est une vue analogue à celle de la figure 2 mais pour une autre position du couvercle, et

la figure 5 est une vue de la face interne d'un couvercle de lave-linge pour une variante.

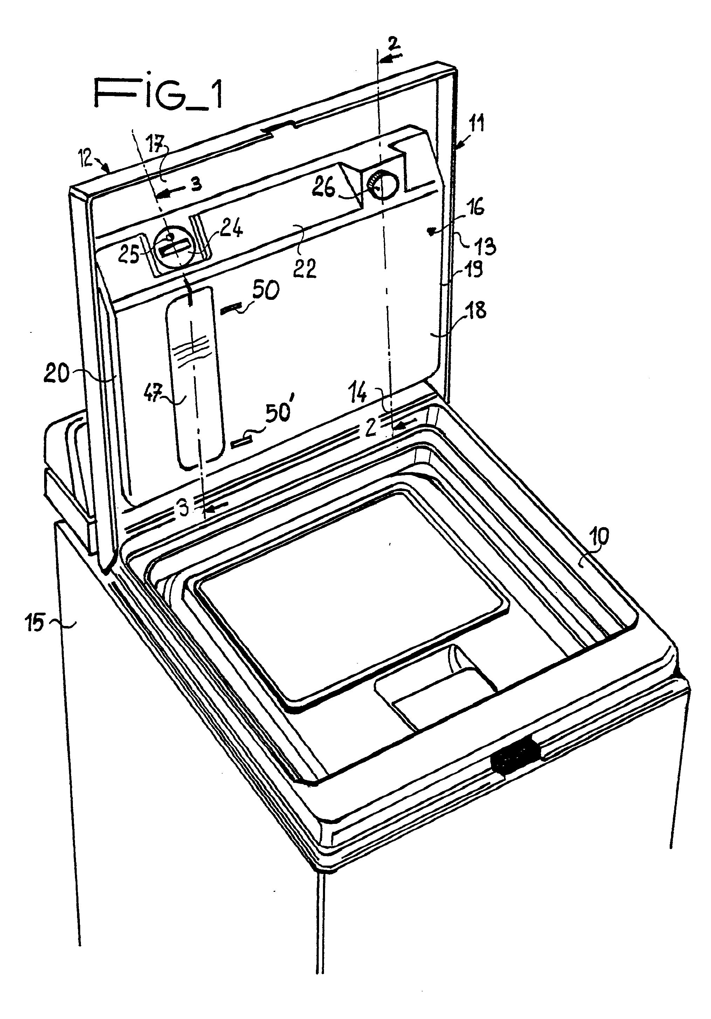

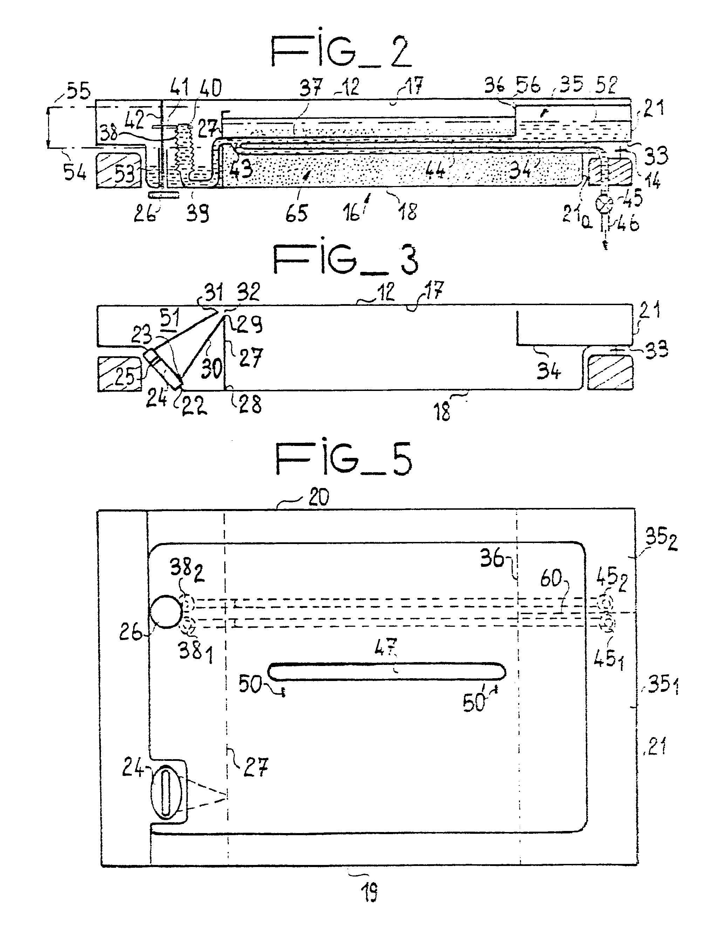

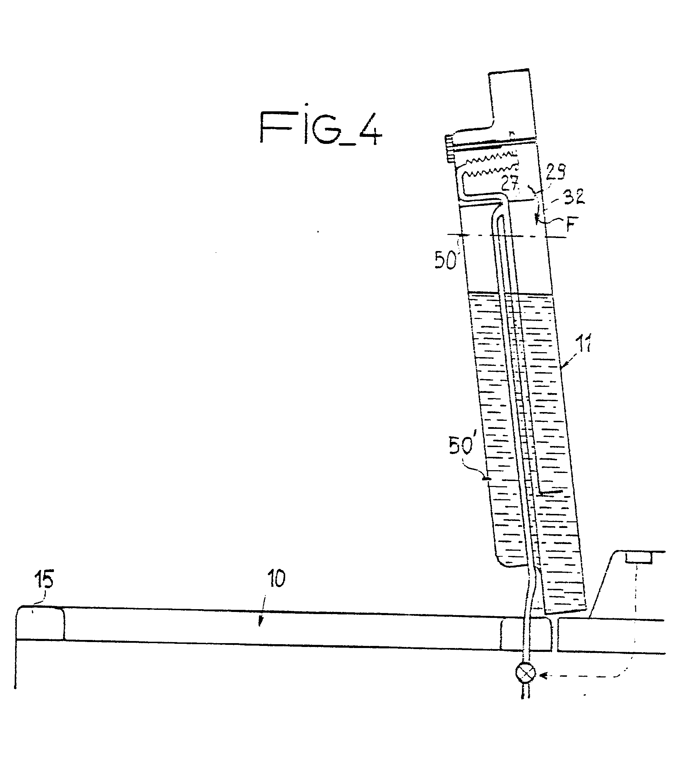

Le lave-linge représenté sur les figures comporte une ouverture supérieure 10 (figures 1 et 4) pour l'introduction et l'extraction du linge du tambour de la machine. Cette ouverture 10 est fermée par une porte ou couvercle 11 qui est horizontale en position fermée (figures 2 et 3) et verticale, ou sensiblement verticale, en position ouverte (figures 1 et 4).

Dans l'exemple la porte 11 présente une paroi extérieure 12 de forme générale rectangulaire de trois côtés de laquelle dépendent des rebords 13 (figure 1) qui, en position fermée, sont dirigés vers le bas. Le seul côté dépourvu de rebord est celui qui présente l'articulation 14 de la porte 11 au bâti 15 du lave-linge.

La réserve 16 de liquide lessiviel est solidaire de la face interne 17 de la paroi 12, et se trouve à l'intérieur du volume délimité par cette paroi et les rebords 13.

Cette réserve 16 comporte un fond 18 parallèle à la paroi 12, deux parois latérales 19 et 20 dont les arêtes supérieures sont sur la face interne 17 de la paroi 12, une paroi arrière 21 dont l'arête supérieure est également dans le plan de la face interne 17 et une paroi antérieure 22, inclinée en partie, reliant le fond 18 à la face 17. L'inclinaison est telle qu'en position ouverte cette paroi 22 est visible et accessible pour l'utilisateur se trouvant devant la machine. La paroi antérieure 22 présente, d'une part, un orifice de remplissage 23 normalement fermé par un bouchon 24 percé d'un trou d'aération 25, et, d'autre part, un bouton 26 de réglage de la dose de produit lessiviel à introduire, à chaque lavage, dans la cuve de la machine comme on le verra plus loin.

A l'intérieur de la réserve 16 est ménagée une paroi 27 parallèle à la paroi arrière 21 mais au voisinage de la paroi antérieure 22. Son arête inférieure 28 est solidaire du fond 18 et son arête supérieure 29 est à distance, relativement faible, de la face interne 17 de la paroi 12. Elle s'étend entre les parois latérales 19 et 20 (figure 5).

L'orifice 23 de remplissage est bordé par un entonnoir 30 dont l'extrémité 31 de faible section débouche dans l'intervalle 32 entre l'arête supérieure 29 de la paroi 27 et la face interne 17 de la paroi 12.

Le fond 18 présente, à sa partie arrière, une partie relevée 33 à mi-hauteur entre la partie principale de ce fond 18 et la paroi 12.

Cette partie 33 de fond est prolongée vers l'avant par une paroi 34 s'étendant entre les parois latérales 19 et 20 et constituant le fond d'un réservoir-doseur 35 dont la paroi arrière est confondue avec la paroi arrière 21 de la réserve 16 et qui présente une paroi antérieure 36 s'étendant également entre les parois latérales 19 et 20.

La distance entre les parois 21 et 36 ne constitue qu'une fraction relativement faible de la distance entre les parois 21 et 27.

Le fond 34 du réservoir-doseur 35 communique, par l'intermédiaire d'un conduit 37, avec un souf-

flet 38 à l'avant de la paroi 27. Ce soufflet 38 a la forme générale d'un cylindre d'axe perpendiculaire au plan du fond 18. Le conduit 37 traverse ainsi la paroi 27 et, à l'avant de cette dernière paroi, il comporte une partie 39 appliquée contre le fond 18 qui se raccorde à l'extrémité inférieure du soufflet 38.

L'extrémité supérieure 40 du soufflet 38 est solidaire d'un organe 41 présentant un taraudage coopérant avec le filetage d'une vis 42 entraînée par le bouton 26. Ainsi la position angulaire du bouton 26 détermine la hauteur de l'extrémité supérieure 40 du soufflet 38 c'est-à-dire, comme on le verra ci-après, le niveau de la surface libre du liquide dans le réservoir-doseur 35.

Le conduit 37 présente, à l'arrière de la paroi 27 et au voisinage de cette dernière, une dérivation 43 vers un autre conduit 44 traversant la paroi arrière 21$_a$, raccordant les fonds 18 et 33, et aboutissant à une électrovanne 45 se trouvant dans le corps de la machine et dont l'ouverture et la fermeture sont commandées par le programmateur de cette machine. Cette électrovanne 45 est, par son autre extrémité, reliée à un conduit 46 débouchant dans la cuve du lave-linge.

Le fond 18 présente, de préférence au voisinage de l'ouverture 23, une partie transparente ou fenêtre 47 occupant une grande partie de la longueur séparant les parois 36 et 27.

Le fonctionnement est le suivant :

Pour remplir de lessive liquide le réservoir 16 on dispose la porte 11 en position verticale (figures 1 et 4), c'est-à-dire en position ouverte, et on dégage le bouchon 24 de l'orifice 23 pour introduire la lessive liquide dans le bac de réserve délimité par la paroi antérieure 27, les parois latérales 19 et 20 et les parois arrière 21 et 21$_a$. L'entonnoir 30 sert à guider le liquide de l'orifice 23 vers ce bac.

Un repère 50 sur la fenêtre 47, ou au voisinage de cette dernière, indique le niveau maximum de liquide à introduire pour qu'en position fermée (couvercle horizontal) la surface libre du liquide ne dépasse pas l'arête supérieure 29 de la paroi 27 et donc ne déborde pas dans le compartiment 51 à l'avant de la paroi 27. En effet, comme ce compartiment présente le bouchon 24 percé du trou d'aération 25, du liquide introduit dans ce compartiment risquerait de s'échapper par le trou 25. Ce niveau 50 est, lorsque le couvercle est vertical, au-dessous de la dérivation 43 et, a fortiori, au-dessous de la paroi 27. La disposition de la dérivation 43 au voisinage de la paroi 27 présente l'avantage d'empêcher l'introduction de la lessive liquide dans la cuve de la machine lorsque, par suite d'un incident, l'électrovanne 45 est ouverte alors que le couvercle est en position verticale.

La quantité minimum de liquide à introduire dans la réserve est également marquée par un repère 50' sur la fenêtre 47 ou au voisinage de cette dernière. Ce repère est, en position verticale du couvercle, au-dessus de la paroi antérieure 36 du réservoir 35. Il correspond, dans la position ouverte du couvercle, au niveau minimum de liquide, au-dessous duquel le réservoir-doseur 35 ne peut être rempli après fermeture dudit couvercle.

Après fermeture du couvercle le liquide pénètre en raison du principe des vases communicants, dans le soufflet 38. Le niveau maximal 52 de liquide dans ce réservoir 35 est ainsi déterminé par le niveau de l'extrémité 40 du soufflet 38. En d'autres termes la dose de liquide dans le réservoir 35, et donc la dose de liquide qui sera introduite dans la cuve de la machine au cours de son fonctionnement par ouverture de la vanne 45, est déterminée par la position de l'extrémité 40 du soufflet 38. La rotation du bouton 26 constitue donc un moyen simple de réglage de la dose de lessive liquide à introduire dans la cuve de la machine.

Tout de suite après la fermeture du couvercle la surface libre du liquide dans le réservoir 35 est au-dessus du niveau de l'extrémité 40 du soufflet 38. Du liquide se déverse donc dans la partie de la réserve en avant de la paroi 27 (figure 2). Ce liquide 53 est réintroduit (flèche F, figure 4) dans le bac de réserve 65 à l'arrière de la paroi 27 par l'intervalle 32 lorsque le couvercle est remis en position verticale.

Le niveau minimum 54 de l'extrémité 40 du soufflet 38 (figure 2) correspond sensiblement au niveau du fond 34 du réservoir 35 tandis que le niveau maximum 55 de cette extrémité 40 correspond sensiblement au niveau de l'arête libre 56 de la paroi 36 du réservoir-doseur 35.

Dans la variante représentée sur la figure 5 les éléments analogues ont été repérés par les mêmes chiffres de référence. Cette variante se distingue du mode de réalisation décrit en relation avec les figures 1 à 4 par le fait qu'on prévoit deux réservoirs-doseurs 35$_1$ et 35$_2$, le premier 35$_1$ étant destiné à contenir une dose de lessive liquide pour le lavage et le second 35$_2$ est destiné à recevoir une dose de lessive liquide de prélavage. La paroi antérieure 36 est commune à ces deux réservoirs qui sont séparés par une paroi 60 parallèle aux parois latérales 19 et 20. Dans cette réalisation on prévoit deux soufflets 38$_1$ et 38$_2$ dont les extrémités respectives (non représentées) sont solidaires d'un même organe analogue à celui de référence 41 de la figure 2 dont la position est réglable par le bouton 26. Dans cette variante l'électrovanne 45$_1$ permet l'introduction du liquide de lavage et l'électrovanne 45$_2$ l'introduction du liquide de prélavage dans la cuve de la machine.

## Revendications

1. Machine à laver le linge comportant un couvercle (12) à réserve (16) de produit lessiviel liquide introduit dans la cuve lors du fonctionnement de la machine, le couvercle (12) pouvant occuper deux positions différentes et contenant un bac (65) et un réservoir (35) se déplaçant avec le couvercle (12) et ayant une ouverture (23) permettant le remplissage en produit lessiviel lorsque le couvercle est ouvert, le réservoir-doseur (35) communiquant avec le bac (65) de façon qu'il soit rempli automatiquement par le liquide du bac après ouverture du couvercle (12), caractérisée en ce que le réservoir-doseur (35) est en communication avec un conduit (38) dont l'extrémité ouverte (40), lorsque le couvercle est fermé, détermine, selon le principe des vases communicants, le niveau de la surface libre (52) du liquide dans ce réservoir (35).

2. Machine selon la revendication 1, caractérisée en ce que le niveau de l'extrémité (40) du conduit (38) communiquant avec le réservoir-doseur est ajustable.

3. Machine selon la revendication 2, caractérisée en ce que le conduit (38) est constitué par un soufflet dont l'extrémité (40) est solidaire d'un organe (41) déplaçable grâce à un élément de réglage (26) de la dose.

4. Machine selon la revendication 2 ou 3, caractérisée en ce que l'extrémité supérieure (40) du conduit (38) est solidaire d'un organe (41) présentant un taraudage coopérant avec le filetage d'une vis (42) solidaire d'un bouton (26) de réglage de la dose.

5. Machine selon l'une quelconque des revendications précédentes, caractérisée en ce que le conduit (38) est à l'extérieur du bac (65) et du réservoir-doseur (35).

6. Machine selon la revendication 5, caractérisée en ce qu'étant du type à chargement par le dessus, à couvercle (12) horizontal en position fermée et vertical, ou sensiblement vertical, en position ouverte, le réservoir-doseur (35) est disposé au voisinage de l'articulation (14) du couvercle et le conduit (38) est disposé du côté (51) de la paroi antérieure (27) du bac (65) qui est opposé à l'articulation (14).

7. Machine selon la revendication 6, caractérisée en ce que la partie (51) de la réserve contenant le conduit (38) communique avec le bac (65) par une fente (32) au-dessus de l'arête libre supérieure (29) de ladite paroi antérieure (27) du bac.

8. Machine selon la revendication 7, caractérisée en ce que ladite partie (51) de réserve contenant le conduit (38) présente un orifice (23) d'introduction du produit lessiviel liquide lorsque le couvercle est ouvert.

9. Machine selon la revendication 8, caractérisée en ce que l'orifice (23) d'introduction de produit lessiviel est relié à la fente (32) par un entonnoir (30).

10. Machine selon la revendication 8 ou 9, caractérisée en ce qu'elle comporte un bouchon (24) présentant un trou d'aération (25) et destiné à fermer l'orifice (23) d'introduction du produit lessiviel liquide.

11. Machine selon l'une quelconque des revendications 6 à 10, caractérisée en ce que le réservoir-doseur (35) est relié au conduit (38) par une tubulure (37) qui présente une dérivation (43) reliée, par une autre tubulure (44), à une vanne (45) de déversement de la dose de produit lessiviel dans la cuve de la machine lorsque celle-ci est en fonctionnement, cette dérivation (43) étant, quand le couvercle est ouvert, au-dessus du niveau maximum (50) de produit lessiviel liquide dans la réserve quand le couvercle est ouvert.

12. Machine selon la revendication 11, caractérisée en ce que la dérivation (43) est à l'intérieur du bac (65) au voisinage de la paroi antérieure (27) de ce bac.

13. Machine selon l'une quelconque des revendications précédentes, caractérisée en ce que le fond du bac (65) présente une fenêtre transparente (47) et des repères (50 et 50') pour les niveaux respectivement maximal et minimal de liquide à introduire lorsque le couvercle est ouvert, le niveau minimal étant celui au-dessous duquel le réservoir-doseur (35) ne peut être rempli.

14. Machine selon l'une quelconque des revendications précédentes, caractérisée en ce qu'elle comprend deux réservoirs-doseurs ($35_1$, $35_2$) reliés à des conduits respectifs ($38_1$, $38_2$).

15. Machine selon la revendication 14, caractérisée en ce que les extrémités des deux conduits ($38_1$, $38_2$) sont solidaires d'un même organe (41) déplaçable par un élément de réglage (26) de la dose.

16. Machine selon l'une quelconque des revendications précédentes, caractérisée en ce que le fond (34) du réservoir-doseur (35) est, quand le couvercle est fermé, au-dessus du fond (18) du bac (65) de réserve.

17. Machine selon l'une quelconque des revendications précédentes, caractérisée en ce que le bac (65) est destiné à être rempli par plusieurs doses de produit lessiviel liquide.

**Claims**

1. Washing machine comprising a cover (12) including reservoir means (16) for the liquid washing agent introduced into the tub while the machine operates, said cover (12) being adapted to take two different positions and including a container (65) and a stock receptacle (35) which move together with said cover (12) and have an opening (23) for charging the washing agent when the cover is open, the stock metering receptacle (35) furthermore being communicated to said container (65) such that after opening of said cover (12) it is automatically filled with liquid from said container, characterised in that the stock metering receptacle (35) is in communication with a conduit piece (38) whose open end determines the level of the free surface (52) of the liquid in said stock metering receptacle (35) according to the principle of communicating tubes when the cover is closed.

2. A machine as claimed in claim 1, characterised in that the level of the end (40) of the conduit piece (38) communicating with said stock metering receptacle is adjustable.

3. A machine as claimed in claim 2, characterised in that the conduit piece (38) is constituted by a bellows whose end (40) is fixedly joined to an element (41) adapted to be displaced by means of a dose regulating member (26).

4. A machine as claimed in claim 2 or claim 3, characterised in that the upper end (40) of the conduit piece (38) is fixedly joined to an element (41) provided with an internal screw thread which cooperates with an external screw thread on a screw (42) that is fixedly secured to a dose regulating button (26).

5. A machine as claimed in any of the preceding claims, characterised in that the conduit piece (38) is disposed externally of said container (65) and said stock metering receptacle (35).

6. A machine as claimed in claim 5, characterised in that it is equipped for charging from the top, that the cover (12) when closed has a horizontal position and when open has a substantially vertical position, that said stock metering receptacle (35) is provided in the vicinity of the hinge (14) of said cover and said conduit piece (38) is provided on the side (51) of the front wall (27) of said container (65) which is opposite said hinge (14).

7. A machine as claimed in claim 6, characterised in that the portion (51) of the reservoir means containing said conduit piece (38) communicates with said container (65) through a slot (32) above the upper free edge (29) of the front wall (27) of said container.

8. A machine as claimed in claim 7, characterised in that the portion (51) of said reservoir means containing said conduit piece (38) is provided with an opening (23) for charging liquid washing agent when the cover is open.

9. A machine as claimed in claim 8, characterised in that said charging opening (23) for the washing agent communicates with said slot (32) via a funnel portion (30).

10. A machine as claimed in claim 8 or claim 9, characterised in that it is provided with a plug (24) including a vent hole (25) for sealing the opening (23) for charging liquid washing agent.

11. A machine as claimed in any of the claims 6 to 10, characterised in that said stock metering receptacle (35) is communicated to said conduit piece (38) via a tube (37) including a branch conduit (43) which through another tube (44) is in communication with a valve (45) for dispensing the dose of washing agent into the tub of the machine while the latter is in operation, said branch conduit (43) with the cover open being above the maximum level (50) of the liquid washing agent in said reservoir means.

12. A machine as claimed in claim 11, characterised in that the branch conduit (43) is provided within said container (65) in the vicinity of the front wall (27) thereof.

13. A machine as claimed in any of the preceding claims, characterised in that the bottom of said container (65) is provided with a transparent window (47) and with indications (50 and 50') for indicating the maximum and the minimum level of the liquid to be charged when the cover is open, the minimum level being the one below which the stock metering receptacle (35) cannot be filled.

14. A machine as claimed in any of the preceding claims, characterised in that it comprises two stock metering receptacles (35$_1$, 35$_2$) which are in communication with corresponding conduit pieces (38$_1$, 38$_2$).

15. A machine as claimed in claim 14, characterised in that the ends of said two conduit pieces (38$_1$, 38$_2$) are fixedly joined to one and the same element (41) which is adapted to be displaced by a dose regulating member (26).

16. A machine as claimed in any of the preceding claims, characterised in that the bottom (34) of the stock metering receptacle (35) is above the bottom (18) of the container (65) of said reservoir means when the cover is closed.

17. A machine as claimed in any of the preceding claims, characterised in that the container (65) is adapted to receive several doses of the charged liquid washing agent.

## Patentansprüche

1. Waschmaschine mit einem Deckel (12) mit einer Vorratseinrichtung (16) für das während des Betriebs der Maschine in den Bottich eingeleitete flüssige Waschmittel, wobei der Deckel (12) zwei verschiedene Stellungen einnehmen kann und einen Behälter (65) und ein Vorratsgefäß (35) enthält, die sich mit dem Deckel (12) bewegen und eine Öffnung (23) zum Einfüllen des Waschmittels bei geöffnetem Deckel aufweisen, wobei ferner das Vorrats-Dosiergefäß (35) mit dem Behälter (65) so in Verbindung steht, daß es nach dem Öffnen des Deckels (12) automatisch von der Flüssigkeit des Behälters gefüllt wird, dadurch gekennzeichnet, daß das Vorrats-Dosiergefäß (35) mit einem Leitungsstutzen (38) in Verbindung steht, dessen offenes Ende (40) bei geschlossenem Deckel nach dem Prinzip der kommunizierenden Röhren das Niveau der freien Oberfläche (52) der Flüssigkeit in diesem Vorrats-Dosiergefäß (35) bestimmt.

2. Maschine nach Anspruch 1, dadurch gekennzeichnet, daß das Niveau des Endes (40) des mit dem Vorrats-Dosiergefäß in Verbindung stehenden Leitungsstutzens (38) einstellbar ist.

3. Maschine nach Anspruch 2, dadurch gekennzeichnet, daß der Leitungsstutzen (38) von einem Balgen gebildet wird, dessen Ende (40) fest mit einem Element (41) verbunden ist, das mittels eines Dosis-Regelelements (26) verschiebbar ist.

4. Maschine nach Anspruch 2 oder 3, dadurch gekennzeichnet, daß das obere Ende (40) des Leitungsstutzens (38) fest mit einem Element (41) verbunden ist, das ein Innengewinde aufweist, das mit dem Außengewinde einer mit einem Knopf (26) zur Regelung der Dosis fest verbundenen Schraube (42) zusammenwirkt.

5. Maschine nach einem der vorangehenden Ansprüche, dadurch gekennzeichnet, daß der Leitungsstutzen (38) sich außerhalb des Behälters (65) und des Vorrats-Dosiergefäßes (35) befindet.

6. Maschine nach Anspruch 5, dadurch gekennzeichnet, daß sie für Beladung von oben eingerichtet ist, daß der Deckel (12) geschlossen eine waagerechte und offen eine senkrechte oder im wesentlichen senkrechte Stellung einnimmt, das Vorrats-Dosiergefäß (35) in der Nähe des Gelenks (14) des Deckels und der Leitungsstutzen (38) auf der dem Gelenk (14) entgegengesetzten Seite (51) der Vorderwand (27) des Behälters (65) angeordnet ist.

7. Maschine nach Anspruch 6, dadurch gekennzeichnet, daß der den Leitungsstutzen (38) enthaltende Teil (51) der Vorratseinrichtung mit dem Behälter (65) durch einen Schlitz (32) oberhalb der oberen freien Kante (29) der Vorderwand (27) des Behälters in Verbindung steht.

8. Maschine nach Anspruch 7, dadurch gekennzeichnet, daß der den Leitungsstutzen (38) enthaltende Teil (51) der Vorratseinrichtung eine Öffnung (23) zum Einfüllen des flüssigen Waschmittels bei geöffnetem Deckel aufweist.

9. Maschine nach Anspruch 8, dadurch gekennzeichnet, daß die Einfüllöffnung (23) für das Waschmittel mit dem Schlitz (32) durch einen Trichter (30) verbunden ist.

10. Maschine nach Anspruch 8 oder 9, dadurch gekennzeichnet, daß sie einen Stopfen (24) mit einem Belüftungsloch (25) aufweist, der zum Verschließen der Öffnung (23) zum Einfüllen des flüssigen Waschmittels dient.

11. Maschine nach einem der Ansprüche 6 bis 10, dadurch gekennzeichnet, daß das Vorrats-Dosiergefäß (35) mit dem Leitungsstutzen (38) durch eine Rohrleitung (37) verbunden ist, die eine Abzweigung (43) aufweist, die durch eine andere Rohrleitung (44) mit einem Ventil (45) zur Abgabe der Dosis des Waschmittels in den Bottich der Maschine, während diese in Betrieb ist, verbunden ist, wobei diese Abzweigung (43) sich bei geöffnetem Deckel oberhalb des maximalen Niveaus (50) des flüssigen Waschmittels in der Vorratseinrichtung bei geöffnetem Deckel befindet.

12. Maschine nach Anspruch 11, dadurch gekennzeichnet, daß die Abzweigung (43) sich innerhalb des Behälters (65) in der Nähe der Vorderwand (27) dieses Behälters befindet.

13. Maschine nach einem der vorangehenden Ansprüche, dadurch gekennzeichnet, daß der Boden des Behälters (65) ein durchsichtiges Fenster (47) und Markierungen (50 und 50') für das Höchstniveau bzw. Mindestniveau der bei geöffnetem Deckel einzufüllenden Flüssigkeit aufweist, wobei das Mindestniveau dasjenige ist, unterhalb welchem das Vorrats-Dosiergefäß (35) nicht gefüllt werden kann.

14. Maschine nach einem der vorangehenden Ansprüche, dadurch gekennzeichnet, daß sie zwei Vorrats-Dosiergefäße (35₁, 35₂) aufweist, die mit entsprechenden Leitungsstutzen (38₁, 38₂) verbunden sind.

15. Maschine nach Anspruch 14, dadurch gekennzeichnet, daß die Enden der zwei Leitungsstutzen (38₁, 38₂) fest mit ein und demselben Element (41) verbunden sind, das durch ein Dosis-Regelelement (26) verschiebbar ist.

16. Maschine nach einem der vorangehenden Ansprüche, dadurch gekennzeichnet, daß der Boden (34) des Vorrats-Dosiergefäßes (35) sich bei geschlossenem Deckel oberhalb des Bodens (18) des Behälters (65) der Vorratseinrichtung befindet.

17. Maschine nach einem der vorangehenden Ansprüche, dadurch gekennzeichnet, daß der Behälter (65) zur Aufnahme mehrerer Dosen des eingefüllten flüssigen Waschmittels bestimmt ist.

FIG_1

# FIG_2

# FIG_3

# FIG_5

FIG_4